(19) Europäisches Patentamt

European Patent Office

Office européen des brevets

(11) **EP 1 538 799 A2**

(12) **EUROPÄISCHE PATENTANMELDUNG**

(43) Date of publication:
08.06.2005 Bulletin 2005/23

(51) Int Cl.⁷: **H04L 27/227**, H03L 7/107

(21) Application number: 05000413.4

(22) Date of filing: 11.03.1998

(84) Designated Contracting States:
AT BE CH DE DK ES FI FR GB GR IE IT LI LU MC NL PT SE

(30) Priority: 12.03.1997 US 37914 P
09.06.1997 US 871109

(62) Document number(s) of the earlier application(s) in accordance with Art. 76 EPC:
98910290.0 / 0 966 819

(71) Applicant: **INTERDIGITAL TECHNOLOGY CORPORATION**
Wilmington, DE 19801 (US)

(72) Inventors:
• Mesecher, David K.
Huntington Station NY 11746 (US)
• Yang, Rui
Greenlawn NY 11740 (US)
• Cerda, Ramon
West Babylon NY 11704 (US)

(74) Representative: **Frohwitter, Bernhard, Dipl.-Ing.**
Patent- und Rechtsanwälte,
Possartstrasse 20
81679 München (DE)

Remarks:
This application was filed on 11 - 01 - 2005 as a divisional application to the application mentioned under INID code 62.

(54) **Phase-locked loop with continuously adjustable bandwidth**

(57) The present invention provides a receiver for receiving a CDMA communication signal transmitted on an RF carrier frequency and demodulating said RF carrier frequency to provide a received information signal; the receiver including a system for correcting phase errors in an information signal which has been modulated on said RF carrier frequency; the correction system comprising:

circuitry for generating a mixing signal and for combining said mixing signal with said information signal to produce a correction signal;

an analyzer for analyzing the phase of said correction signal and generating an error signal based on the deviation of the analyzed phase from a reference phase; and

a bandwidth controller which recursively adjusts the phase of said correction signal such that the phase of said correction signal is substantially equal to said reference phase; said bandwidth controller selecting a bandwidth within an adjustable range based on said correction signal, estimating an offset by interrogating said error signal; and modifying said collection signal by said offset.

FIG. 5

EP 1 538 799 A2

**Description**

**BACKGROUND OF THE INVENTION**

**Field of the Invention**

This invention is generally directed to wireless digital communication systems. More particularly, the invention is directed to a code division multiple access (CDMA) receiver having a continuously adjustable bandwidth phase-locked loop for accurately determining the carrier frequency of a received signal.

**Description of Related Art**

Over the last decade consumers have become accustomed to the convenience of wireless communication systems. This has resulted in a tremendous increase in the demand for wireless telephones, wireless data transmission and wireless access to the World Wide Web. Since the amount of available RF spectrum is fixed, the need to utilize the RF spectrum more efficiently has become paramount. CDMA communication systems have shown promise in the effort to provide more efficient utilization of the RF spectrum, particularly Broadband Code Division Multiple Access™ or (B-CDMA™) communication systems. B-CDMA™ communication systems permit many communications to be transmitted over the same bandwidth, thereby greatly increasing the capacity of the RF spectrum. In a B-CDMA™ communication system, an information signal at the transmitter is mixed with a pseudorandom "spreading code" which spreads the information signal across the entire communicating bandwidth. The spread signal is upconverted to an RF signal for transmission. A receiver, having the same pseudorandom spreading code, receives the transmitted RF signal and mixes the received signal with an RF sinusoidal signal generated at the receiver by a first-stage local oscillator (LO) to downconvert the spread spectrum signal. The spreaded information signal is subsequently mixed with the pseudorandom spreading code, which has also been locally generated, to obtain the original information signal.

In order to detect the information embedded in a received signal, a receiver must know the exact pseudorandom spreading code that was used to spread the signal. All signals which are not encoded with the pseudorandum code of the receiver appear as background noise to the receiver. Accordingly, as the number of users that are communicating within the operating range of a particular base station increases, the amount of background noise also increases, making it difficult for receivers to properly detect and receive signals. The transmitter may increase the power of the transmitted signal, but this will increase the noise as seen by other receivers. Therefore, increasing the signal-to-noise ratio of a received signal without requiring a corresponding increase in the transmission power of the signal is desirable.

One way to increase the signal-to-noise ratio of a received signal is to ensure that the first stage local oscillator (LO) at the receiver is at the same frequency as the received RF carrier signal. If there is a slight frequency offset, the offset will manifest itself in the baseband section of the receiver as a phase error on the decoded QPSK symbol, resulting in a degradation of the quality of the communication.

Accordingly, it is critical to properly detect the frequency of the received RF carrier signal in order to optimize the quality of the received signal.

**SUMMARY OF THE INVENTION**

The continuously adjusted-bandwidth phase-locked loop (PLL) of the present invention is used by a B-CDMA™ receiver to correct for any deviation, or offset, that may exist between the received radio frequency (RF) carrier signal and the frequency of the first stage LO that converts the received RF carrier signal to an intermediate frequency (IF). The PLL in the receiver includes a filter with an adjustable bandwidth. A wider bandwidth is used during initial acquisition of the received signal. After the PLL has acquired the received carrier signal using the wider bandwidth, the bandwidth of the filter is gradually narrowed to provide a low steady-state error. Accordingly, it is an object of the invention to provide an improved CDMA receiver which corrects for any offset that may exist between the received RF carrier signal and the frequency of the first stage LO.

Other objects and advantages will become apparent to those skilled in the art after reading the detailed description of a presently preferred embodiment.

**BRIEF DESCRIPTION OF THE DRAWINGS**

   **Figure 1** is a communication network embodying the present invention;

**Figure 2** shows propagation of signals between a base station and a plurality of subscriber units;

**Figure 3** is a block diagram of the PLL implemented in a programmable digital signal processor within the receiver section;

**Figure 4** is a detailed block diagram of a rake receiver used in accordance with the teachings of the present inventor;

**Figure 5** is a block diagram of the continuously adjustable bandwidth PLL in accordance with the present invention;

**Figure 6** is a diagram of the mapping of polar and Cartesian coordinates;

**Figure 7** is a look-up table utilized to implement the arctangent analyzer;

**Figure 8** is the preferred embodiment of a look-up table utilized to implement the arctangent analyzer;

**Figure 9** is a block diagram of the PLL filter comprising a lag filter and a lead filter in accordance with the present invention;

**Figure 10** is a block diagram of the bandwidth control section;

**Figure 11** illustrates the transfer function utilized in the bandwidth calculation unit;

**Figure 12A** is a signal diagram of the carrier offset frequency estimate provided by the output of the lag filter;

**Figure 12B** is a signal diagram of the phase correction in degrees provided by the output of the lead filter;

**Figure 12C** is a signal diagram of the bandwidth control signal versus time;

**Figure 12D** is a signal diagram of the dynamic bandwidth versus time; and

**Figure 13** is a flow diagram of the method of adjusting the PLL bandwidth in accordance with the present invention.

## DETAILED DESCRIPTION OF THE PREFERRED EMBODIMENT

The preferred embodiment will be described with reference to the drawing figures wherein like numerals represent like elements throughout.

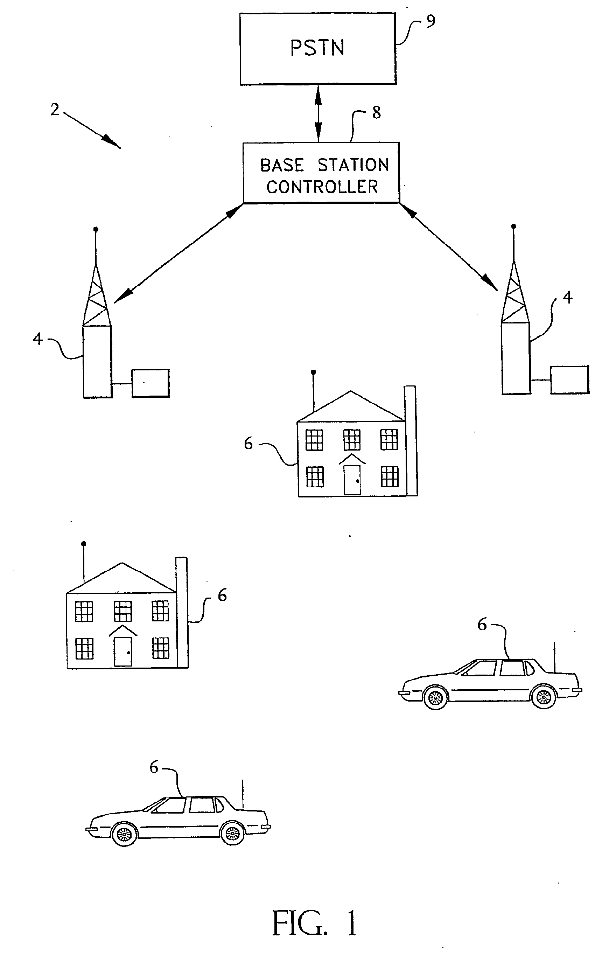

A communication network **2** embodying the present invention is shown in **Figure 1**. The communication network **2** generally comprises one or more base stations **4**, each of which is in wireless communication with a plurality of subscriber units **6**, which may be fixed or mobile. Each subscriber unit **6** communicates with either the closest base station **4** or the base station **4** which provides the strongest communication signal. The base stations **4** also communicate with a base station controller **8**, which coordinates communications among base stations **4**. The communication network **2** may also be connected to a public switched telephone network (PSTN) **9**, wherein the base station controller **8** also coordinates communications between the base stations **4** and the PSTN **9**. Preferably, each base station **4** communicates with the base station controller **10** over a wireless link, although a land line may also be provided. A land line is particularly applicable when a base station **4** is in close proximity to the base station controller **8**.

The base station controller **8** performs several functions. Primarily, the base station controller **8** provides all of the operations, administrative and maintenance (OA&M) signaling associated with establishing and maintaining all of the wireless communications between the subscriber units **6**, the base stations **4**, and the base station controller **8**. The base station controller **8** also provides an interface between the wireless communication system **2** and the PSTN **9**. This interface includes multiplexing and demultiplexing of the communication signals that enter and leave the system **2** via the base station controller **8**. Although the wireless communication system **2** is shown employing antennas to transmit RF signals, one skilled in the art should recognize that communications may be accomplished via microwave or satellite uplinks. Additionally, the functions of the base station controller **8** may be combined with a base station **4** to form a "master base station".

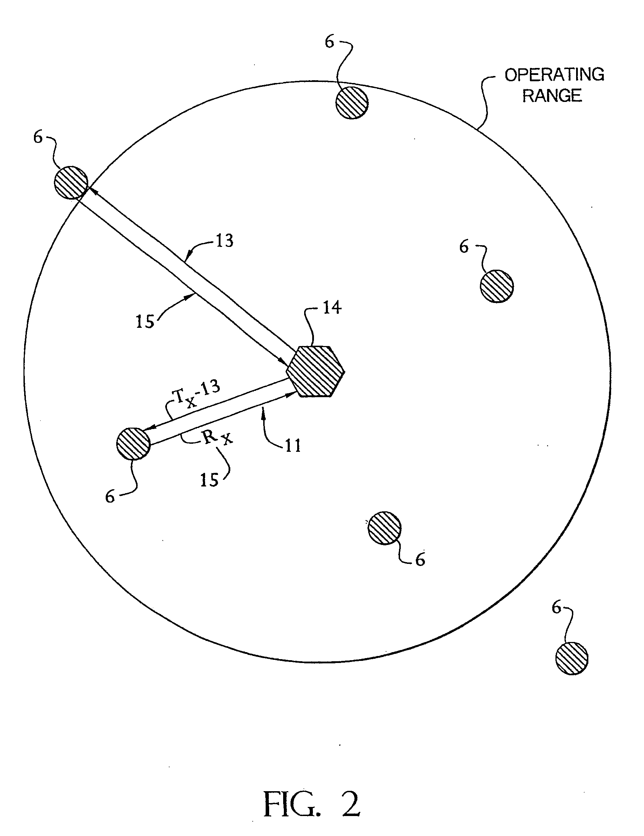

Referring to **Figure 2**, the propagation of signals between a base station **4** and a plurality of subscriber units **6** is shown. A two-way communication channel **11** comprises a signal transmitted **13** (Tx) from the base station **4** to the subscriber unit **6** and a signal received **15** (Rx) by the base station **4** from the subscriber unit **6**. The signaling between the base station **4** and the subscriber units **6** includes the transmission of a pilot signal **17**. The pilot signal **17** is a spreading code which carries no data bits. The pilot signal **17** is used for subscriber unit **6** acquisition and synchronization, as well as for determining the parameters of the adaptive matched filter used in the data receiver.

The subscriber unit **6** must acquire the pilot signal **17** transmitted by the base station 4 before it can receive or transmit any data. Acquisition is the process whereby the subscriber unit **6** aligns its locally generated spreading code with the received pilot signal **17**. The subscriber unit **6** searches through all of the possible phases of the received pilot signal **17** until it detects the correct phase, (the beginning of the pilot signal **17**).

The PLL **10** in accordance with the present invention acts upon the transmitted pilot signal **17**, which is an auxiliary signal transmitted from the base station **4** to all subscriber units 6 and from subscriber units **6** to the base station **4** which is not used as a traffic channel to transmit any voice or data information. With respect to the subscriber units **6**, the signal **17** is used: 1) to provide synchronization of the locally generated pseudorandom code with the transmitted pseudorandom code; and 2) as a transmission power reference during initial power ramp-up of the subscriber unit **6**. With respect to the base station **4**, the pilot signal **17** is utilized to provide synchronization of the locally generated pseudorandom code with the transmitted pseudorandom code. In accordance with the present invention, the pilot signal **17** is additionally used in both the base station **4** and the subscriber unit **6** to determine the difference between the frequency of the received RF carrier signal and the first stage LO that downconverts the received RF carrier signal to IF.

The CDMA pilot signal **17** is a sequence of pseudorandom complex numbers which are modulated by a constant complex pilot value having a magnitude of one and phase of zero. The advantage of using the pilot signal **17** is that the transmitted despread value is known to the subscriber unit **6**. This can be used by the PLL **10** in the subscriber unit **6** to estimate and correct for phase error due to RF carrier signal offset.

The difference in the frequency of the received RF carrier signal and the first stage LO can be generally attributed to two sources: 1) component mismatches; and 2)RF distortion. Component mismatches between the transmitter oscillator **4** and the receiver oscillator **6** may cause slightly different oscillator outputs. These component mismatches can be further exacerbated by local environmental conditions, such as the heating or cooling of electronic components, which may cause performance changes in the components. With respect to RF distortion, doppler effects caused by the motion of the subscriber unit **6**, the base station **4** or a multipath reflector may cause the RF carrier to become distorted during transmission. This may result in a RF carrier offset.

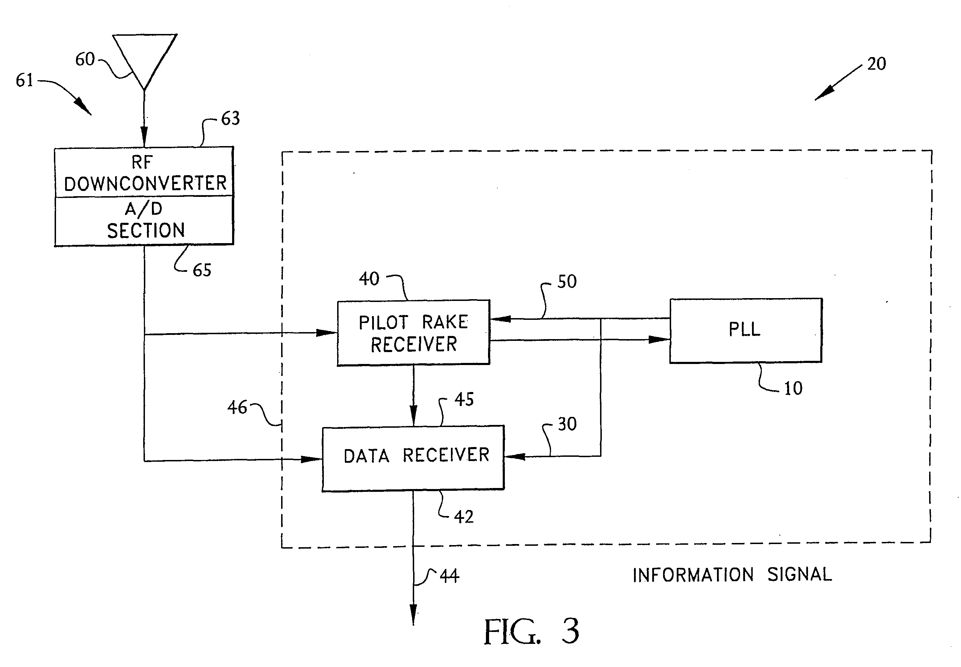

Referring to **Figure 3**, the PLL **10** is implemented in a programmable digital signal processor within the digital receiver section **20** to provide flexibility in system architecture. The pilot signal **17** is received via the antenna **60** and is processed by the analog receiver section **61**, which includes an RF downconverter **63** and an analog-to-digital section **65**. The downconverted and digtized pilot signal **17** is then processed by the digital receiver section **20** which includes a pilot rake receiver **40**, the PLL **10**, and a data receiver **42**. The pilot signal **17** enters the rake receiver **40** for despreading. The PLL monitors the output from the pilot rake receiver **40**, which comprises the despread pilot signal **30**, to estimate and correct for a phase error due to RF carrier offset, thereby providing acceptable speech quality. The pilot rake receiver **40** operates on the pilot signal **17** to build a receiver filter. The receiver filter compensates for channel distortion due to multipath effects. The filter parameters **45** are forwarded from the pilot rake receiver **40** to the data receiver **42** which constructs the receiver filter in accordance with those parameters **45**. Accordingly, when a data signal enters the data receiver **42**, the data receiver **42** is able to compensate for channel distortion due to multipath effects and output a more accurate information signal **44**.

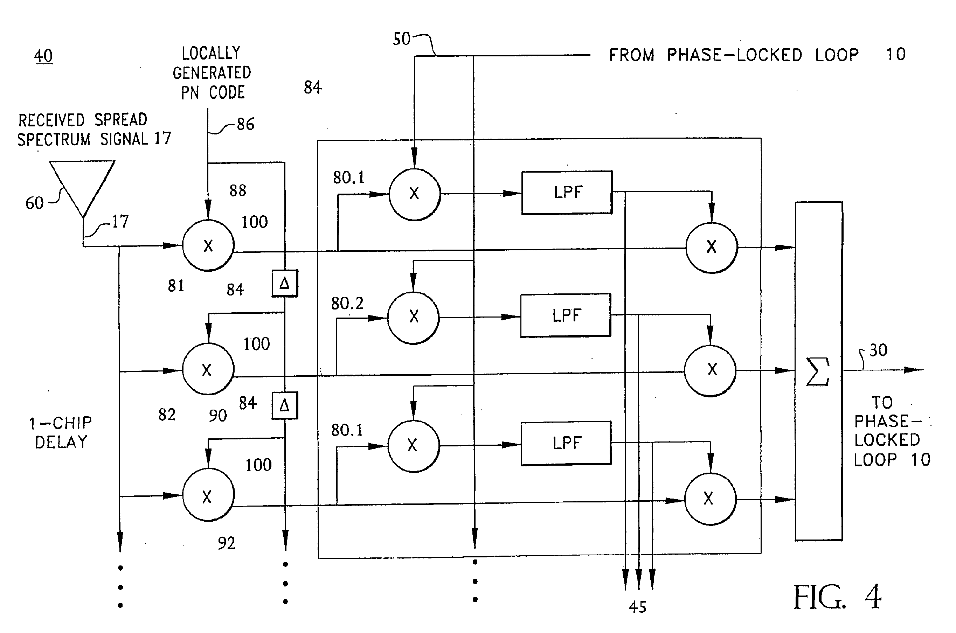

The rake receiver **40** is shown in greater detail in Figure **4**. The rake receiver **40** provides an estimate of the complex impulse response, having real and imaginary components, of the channel over which the pilot signal **17** is transmitted. The rake receiver **40** has a plurality of independent rake elements **80.1**, **80.2**, **80.i**, wherein the input to each rake element **80.1**, **80.2**, **80.i** is a delayed and despread replica **100** of the received pilot signal **17**. The amount of delay **84** between adjacent rake elements **80.1**, **80.2**, **80.i** is one chip. The delayed replicas **100** of the pilot signal **17** are created without delay lines by using a mixer **88, 90, 92** to correlate the received pilot signal **17** with the locally generated pilot pseudonoise code **86**, offset by the appropriate amount of chips **84**.

Each rake element **80.1, 80.2, 80.i** performs an open loop estimation of the value of the impulse response of the RF channel, which can be represented as h(t), at the point t= T*i, where T is the length of a chip. Thus, the rake receiver **40** produces N noisy estimates of the sampled impulse response of the channel of the received pilot signal **17**, at evenly spaced intervals, where N is the number of rake elements **80.1**, **80.2**, **80.i**. The low pass filter on each rake element **80.1**, **80.2**, **80.i** smooths each corresponding sample impulse response estimate. The complex conjugates of each smoothed sampled impulse response estimate are used as the weights on the channel-matching filter. This serves to remove the signal distortion from the received pilot signal **17** and data signals **46** that occur due to multipath effects in the channel.

The pilot rake receiver **40** and the PLL **10** operate in conjunction with one another in the receiver section **20**. In order for the PLL **10** to perform optimally, it requires a despread pilot signal **30** with the distortion effects due to multipath removed. This is accomplished by the adaptive matched filter obtained from using the channel-impulse-response estimate provided by the pilot rake receiver **40**. The pilot rake receiver **40** and the data receiver **42** cannot operate effectively unless the received pilot signal **17** and the data signals **16** have been corrected for phase error due to RF carrier signal offset. The phase error correction signal **50** is provided by the PLL **10** to the pilot rake receiver **40** and data receiver **42**. Optimal performance of the receiver **20** will not occur until the pilot rake receiver **40** and the PLL **10** have reached a mutually satisfactory equilibrium point. The operation of the data receiver **42** is well known to those of skill in the art.

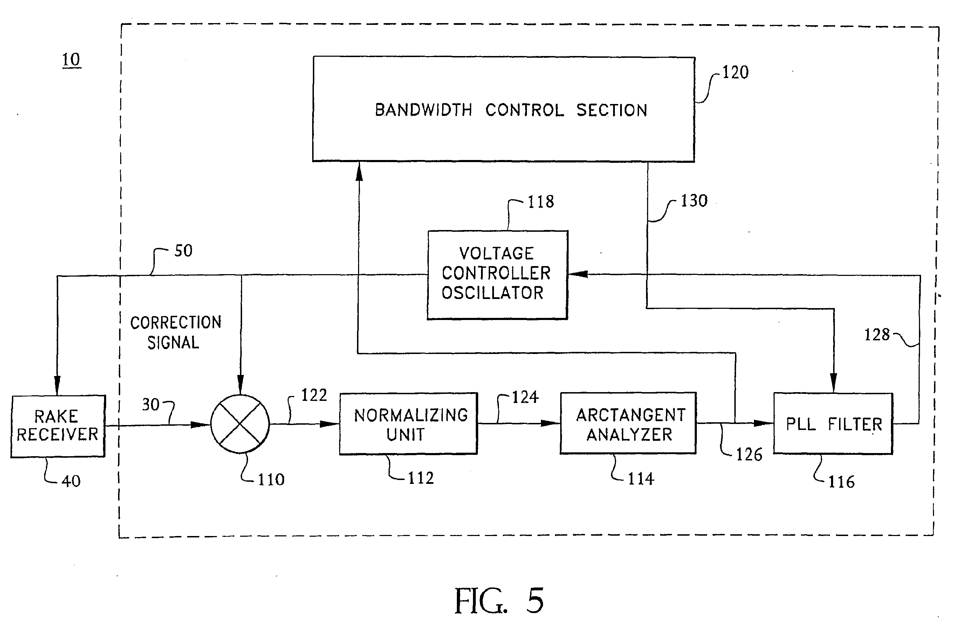

Referring to **Figure 5**, the continuously adjusted-bandwidth PLL **10** in accordance with the present invention is shown. The PLL **10** comprises a mixer **110**, a normalizing unit **112**, an arctangent analyzer **114**, a PLL filter **116**, a voltage controlled oscillator (VCO) **118**, and a bandwidth control section **120**. The mixer **110** receives its input from the pilot rake receiver **40**. The signal output from the rake receiver **40** is the despread pilot signal **30** which has been processed to correct channel distortion due to multipath effects. This signal **30** is mixed with a "correction signal" **50** to produce a complex error signal **122**. In accordance with the present invention, the bandwidth of the PLL filter **116** is adjusted by the bandwidth control section **120** to provide a revised correction signal **50** to the mixer **110**, the rake receiver **40**, and the data receiver **42**. This process is repeated until the complex error signal **122** output from the mixer **122** is at a minimum. It is desired to have the complex error signal **122** as small as possible; ideally it should be zero.

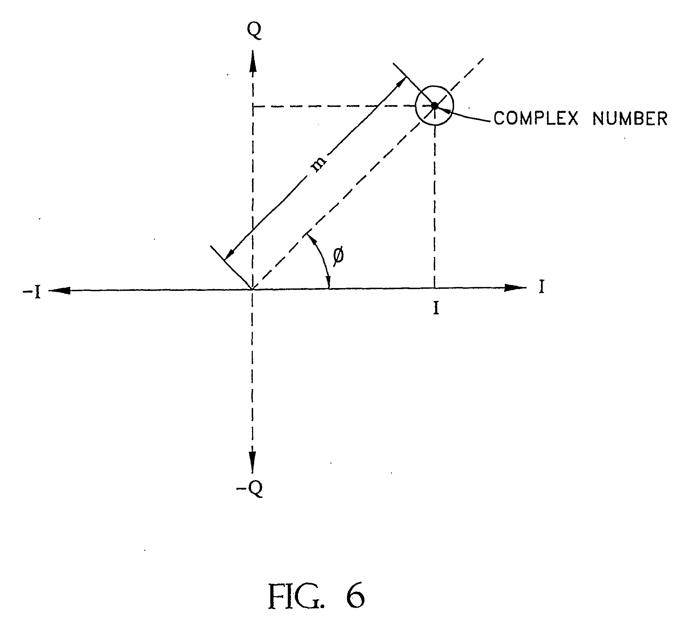

The despread pilot signal **17** is a known complex number that has zero phase. This complex number can be represented in two forms as shown in **Figure 6**: 1) Cartesian form; and **2**) polar form. In Cartesian form, the real part is referred to as the in-phase component, (I-component), and the imaginary part is referred to as the quadrature component, (Q-component). The polar form includes a magnitude (m) and a phase angle (φ). To convert from Cartesian to polar form, the following equations are used:

$$\phi = \tan^{-1}(Q/I) \qquad\qquad \text{Equation (1)}$$

$$m = \sqrt{I^2 + Q^2} \qquad\qquad \text{Equation (2)}$$

Referring back to **Figure 5**, the complex error signal **122** is processed by the normalizing unit **112**, which will be described in greater detail hereinafter. The normalized signal **124** is then input into the arctangent analyzer **114**. The arctangent analyzer **114** analyzes the normalized signal **124**, which is in Cartesian coordinate form, using an 8I-by-8Q arctangent processor to determine the phase φ of the complex number. The arctangent analyzer **114** uses the Cartesian I and Q components which are mapped to provide the phase φ of the complex number. Although this function may be implemented in real time using a microprocessor with associated memory, it would require a high-speed processor and a large amount of memory to accurately calculate.

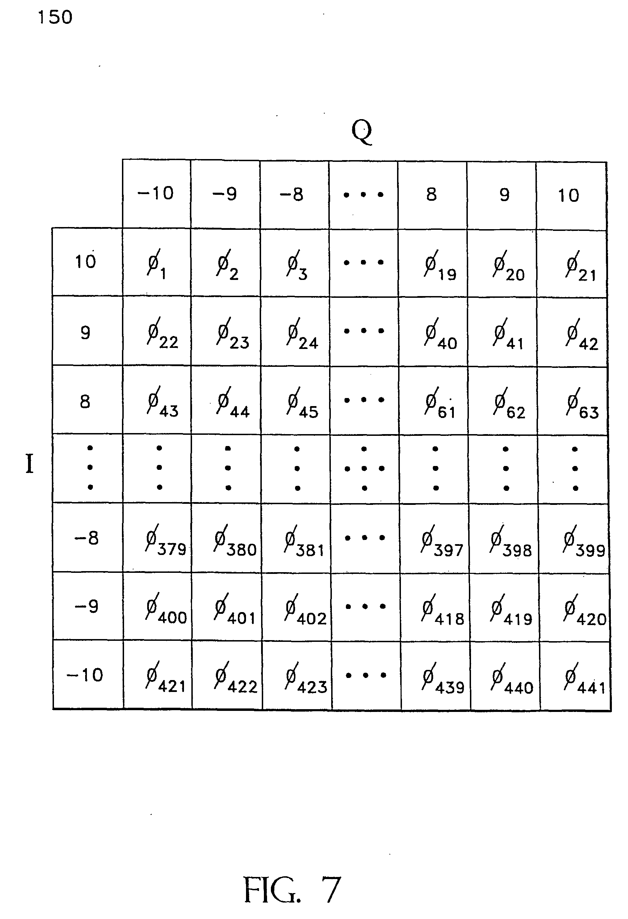

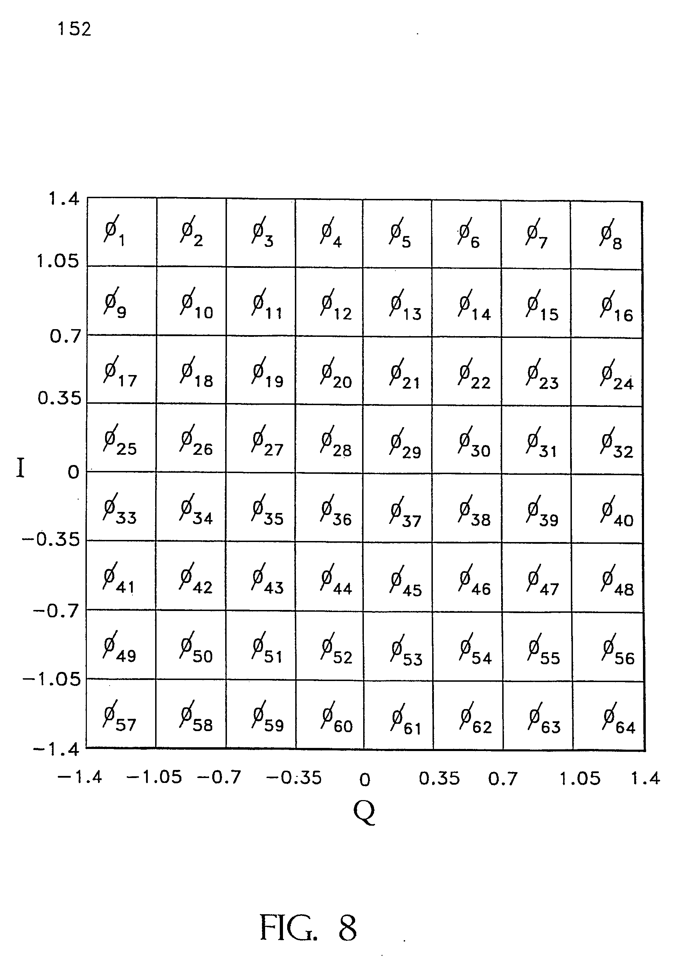

Equations 1 and 2 are implemented using a lookup table **150** when finite resolution is acceptable. For example, if the I component is expected to be an integer between -10 and 10, and the Q component is expected to be an integer between -10 and 10, then the lookup table **150** shown in **Figure 7** may be implemented. The phase φ for any I and Q component pair may be obtained from the lookup table **150**. For example, if I=8.8 and Q=10.1, the values would first be quantized into the integers 1=9 and Q=10, resulting in a phase value $\phi_{20}$ from the lookup table **150**. The arctangent analyzer **114** is preferably implemented with a lookup table **152** having eight I bins and eight Q bins, covering a range of possible I and Q values between 1.4 and +1.4, as shown in **Figure 8**. For example, if I=-0.8 and Q=0.9, the lookup table **152** will return a phase value of $\phi_{55}$.

The size and complexity of lookup table **152** implemented within the arctangent analyzer **114** grows as the range of the values input into the arctangent analyzer **114** increases. Thus, if a wide range of values is permitted to be input into the arctangent analyzer **114**, the arctangent function increases in complexity and the lookup table **152** dramatically increases in size. Accordingly, in order to keep the implementation as simple as possible, the complex error signal **122** is normalized by the normalizing unit **112** prior to being input into the arctangent analyzer **114**. The normalizing unit **112** receives the complex error signal **122** from the mixer **110** and performs a "pseudonormalization" by dividing by the complex error signal **122** by the component, (I or Q), having the larger magnitude. Thus, the magnitude of the number output to the arctangent analyzer **114** will be between 1.0 and 1.414.

Alternatively, true normalization is performed, in which the normalizing unit **112** determines the magnitude of the complex error signal **122,** then divides the error signal **122** by the magnitude. The signal **124** output from the normalizing unit **112** would be complex number with a magnitude of 1 and a phase angle which must be determined by the arctangent analyzer **114**. Although pseudonormalizing the complex error signal **122** is not as optimal as normalization, pseudonormalization requires much less processing power and may be preferred in certain implementations where processing power is at a premium.

Since pseudonormalizing results in a complex number having I and Q component values of between 1.0 and 1.414, performing a pseudonormalization on the complex error signal **122** causes the resulting signal **124** to fall within a smaller input range of the domain of the lookup table **152**. Moreover, by quantizing the I and Q components into 8 bins each, the size of the lookup table **152** is limited to 64 bins, with resolution that is sufficient for the desired PLL performance.

The output from the arctangent analyzer **114** is a quantized phase angle of the complex error signal **122**. Since the pilot signal **17** is transmitted with zero phase angle, it is desired to adjust the quantized phase error signal **126** to have an angle of zero degrees, (a phase of zero). The bandwidth control section **120** continually monitors the quantized phase error signal **126** and generates a control signal **130** to control the bandwidth of the PLL filter **116** based on the quantized phase error signal **126**. As will be explained in detail hereinafter, as the quantized phase error signal **126** approaches zero, the bandwidth of the PLL filter **116** decreases.

Referring back to **Figure 5**, the quantized phase error signal **126** is provided to two sections of the PLL **10**: 1) the PLL filter **116**; and 2) the bandwidth control section **120**. With respect to the PLL filter **116**, the bandwidth of the PLL filter **116** is continuously adjustable. The PLL filter **116** has a wider bandwidth when the quantized phase error signal **126** is large, and a narrow bandwidth when the quantized phase error signal **126** is small. The bandwidth of the PLL filter **116** is selectively and continuously controlled by the bandwidth control section **120** to provide a small steady-state PLL error.

As the bandwidth of the PLL filter **116** is narrowed, the high frequency components of the quantized phase error signal **126** are filtered out. Thus, by eliminating high frequency components, rapid variations in the quantized phase error signal **126** are eliminated and the output signal is smoothed. However, since a filter with a small bandwidth does not have the ability to track rapid variations in an input signal, filters with wide bandwidths are generally used for initial tracking and locking onto a signal.

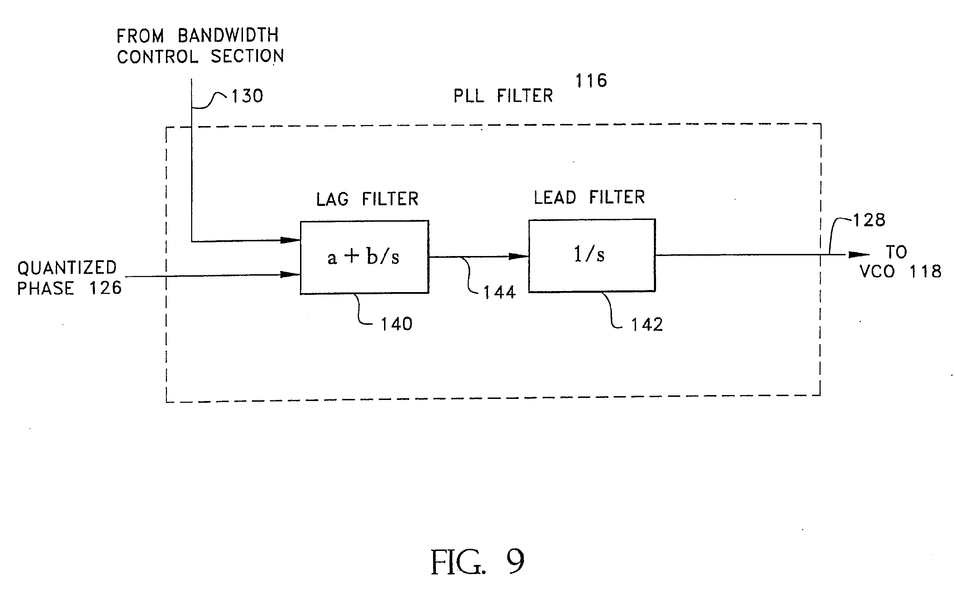

Referring to **Figure 9**, the PLL filter **116** comprises a lag filter **140** and a lead filter **142**. The lag filter **140** receives two inputs: 1) the bandwidth control signal **130** from the bandwidth control section **120**; and 2) the quantized phase error signal **126** output from the arctangent analyzer **114**. The lag filter **140** has a Laplace transformation of

Equation (3)

$$H(s) = a + b/s \,,$$

where $s$ is the complex number that is used as the kernel for the Laplace transform:

$$H(s) = \int_0^\infty h(t)\, e^{-st} dt \quad , \qquad \textbf{Equation (4)}$$

and the coefficients $a$ and $b$ are both functions of the bandwidth (BW) as follows:

$$a = 2 \sqrt{2}\ \pi \cdot BW \,, \qquad\qquad \text{Equation (5)}$$

$$b = (2\pi \cdot BW)^2 \,. \qquad\qquad \text{Equation (6)}$$

The lag filter **140** interrogates the quantized phase error signal **126** and generates an estimate of the RF carrier offset **144**. The RF carrier offset **144** is input into the lead filter **142** which integrates the RF carrier offset **144** to determine an error voltage **128** corresponding to the phase error.

The output of the PLL filter **116**, which is input into the VCO **118**, is the error voltage **128**. In response to the error voltage **128**, the VCO **118** outputs a corresponding correction signal **50** to the mixer **110**, the pilot rake receiver **40** and the data receiver **42**.

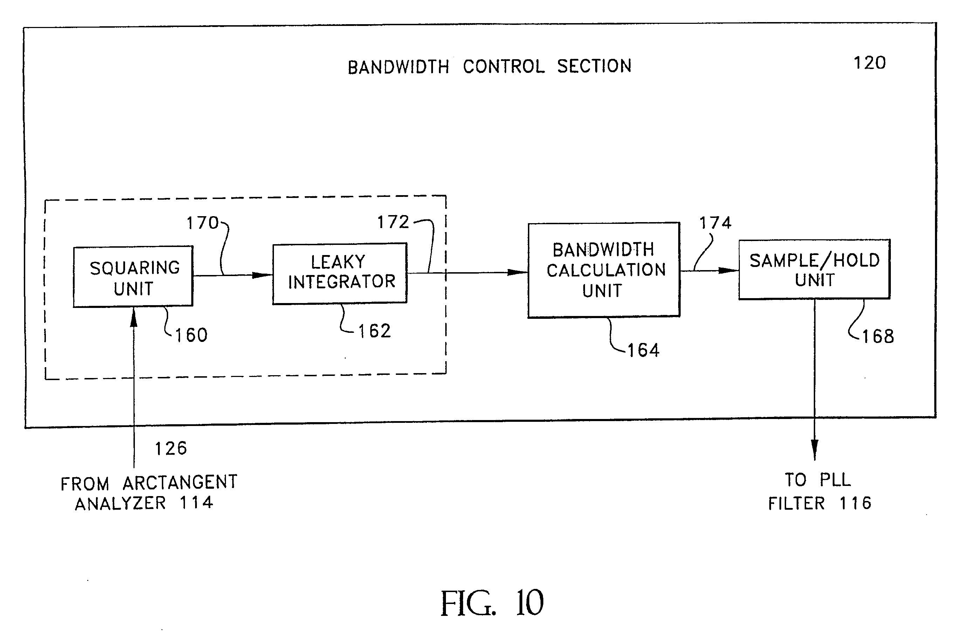

The bandwidth control section **120** will be explained in further detail with reference to **Figure 10**. The bandwidth control section **120** estimates the variance of the quantized phase error signal **126** and converts this into a dynamic bandwidth.

The bandwidth control section **120** comprises four processing units: a squaring unit **160**, a (leaky) integrator unit **162**, a bandwidth calculation unit **164** and a sample/hold unit **168**. The squaring unit **160** squares the quantized phase error signal **126**. The integrator **162**, which is a first order low-pass filter, then integrates and smooths the squared signal **170**. The squaring unit **160** and the integrator **172** act together to estimate the standard deviation (squared), or variance, **172** of the quantized phase error signal **126**. This value **172** is then input into the bandwidth calculation unit **164**.

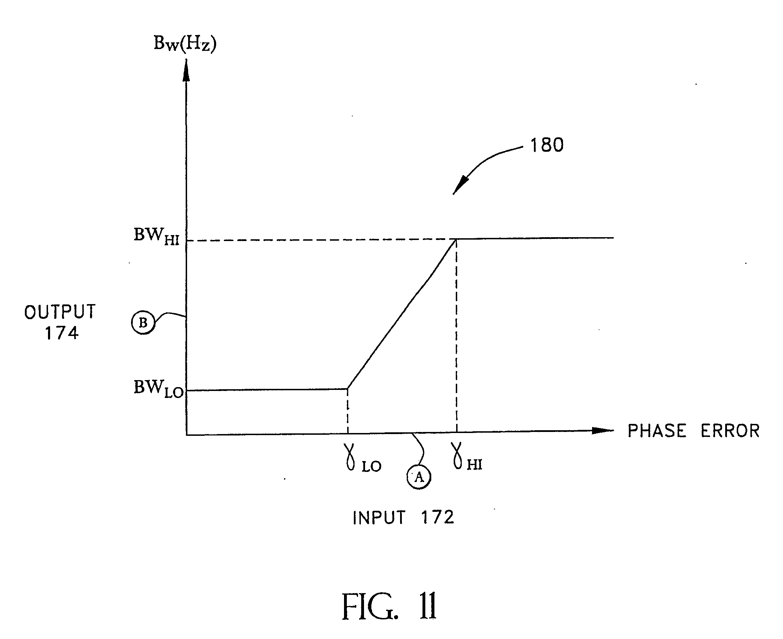

The bandwidth calculation unit **164** determines the desired bandwidth of the PLL filter **116** based upon the input value **172**. The operation of the bandwidth calculation unit **164** will be explained in detail with reference to **Figure 11**. As shown, the bandwidth calculation unit **164** utilizes a select transfer function **180** to correlate the input signal **172** to a desired output bandwidth **174**. The transfer function is defined by four parameters: 1)$BW_{HI}$ - the widest bandwidth value; 2)$BW_{LO}$ - the narrowest bandwidth; 3)$\gamma_{HI}$ - the highest value of the variance of the quantized phase error; and 4)$\gamma_{LO}$- the lowest value of the variance of the quantized phase error. $BW_{HI}$ is selected to produce the shortest initial lock-on time; typically 1000 Hz. The wider the bandwidth, the faster the initial lock-on period. However, if the bandwidth is too high, lock-on will never occur since the filter will attempt to track the noise. $BW_{LO}$ is selected to provide the required. PLL steady state error. Typically, 100 Hz provides 5 degree steady state error, which is acceptable for the present invention. $\gamma_{HI}$ and $\gamma_{LO}$ depend upon the input signal-to-noise ratio and the particular architecture and application. An initial estimate for $\gamma_{LO}$ typically is obtained by operating the PLL **10** in an "ideal" mode (the PLL produces a perfect correction for each sample). An initial estimate for $\gamma_{HI}$ is typically obtained by operating the PLL in the "worst case" mode (the PLL produces a random correction for each sample).

Preferably, the transfer function **180** comprises a linear portion **182** which correlates the input value **172** with the desired output bandwidth **174**. It is preferable to limit the linear portion **182** of the transfer function **180** to a range of phase error input values **172** and bandwidth output values **174** in order to simply the operation of the transfer function unit **164**. For example, when the phase error input value **172** is **A,** the transfer function **180** will provide a desired bandwidth output **174** of **B.** The bandwidth calculation unit **164** may be implemented by a microprocessor which would dynamically calculate the bandwidth. Additionally, the microprocessor may be dynamically updated with different transfer functions depending upon the conditions of the system and the RF channel.

The bandwidth calculation unit **164** outputs the new bandwidth of the PLL filter **116**. This bandwidth **174** is input into the sample/hold unit **168**, which samples the bandwidth **174** and outputs a sampled bandwidth **130** to the PLL filter **116** every N symbols, where N is a predetermined number. A small value of N will provide better performance at the expense of increased processing. In the preferred embodiment, N = 8. The sampled bandwidth **130** from the sample/hold unit **168** is input to the PLL filter **116**.

As shown in the simulation results in **Figures 12A-D**, the use of a continuously adjustable PLL **10** greatly improves the performance of the receiver **20**. All four plots present data from the same simulation run. **Figure 12A** shows the carrier offset frequency estimate (in Hertz) provided by the output of the lag filter **144** as a function of time in seconds. At approximately 0.01 seconds, the average of the frequency estimate quickly reaches the true value of 7000Hz, but since the bandwidth is wide, the estimate is still noisy. As the bandwidth begins to narrow, the frequency estimate becomes less noisy. At 0.02 seconds, the bandwidth has narrowed significantly, and there is very little noise in the frequency estimate.

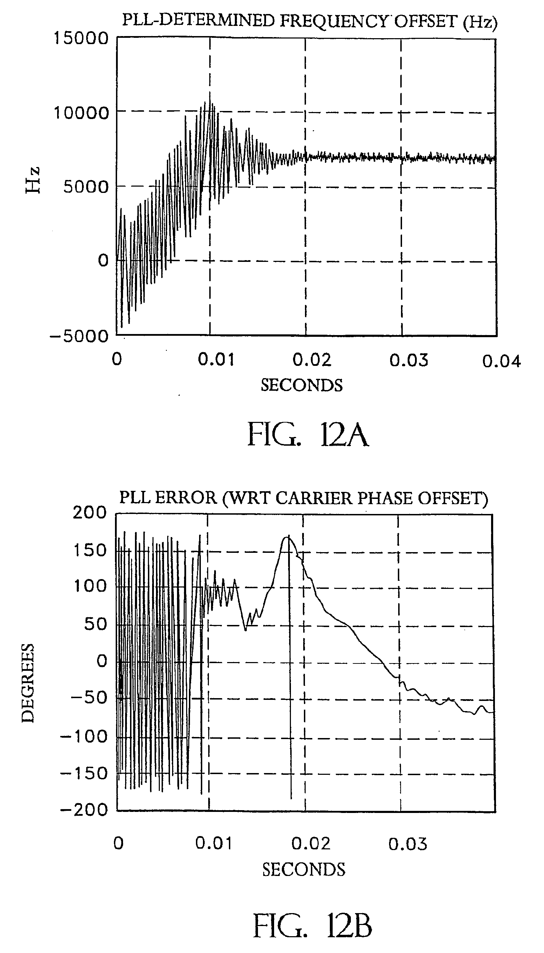

**Figure 12B** shows the phase correction (in degrees) provided by the output of the lead filter **142** as a function of time (in seconds). This correction varies widely until initial lock-on of the PLL **10** at 0.01 seconds. Since the bandwidth is still wide at this point, the correction varies. As the bandwidth is narrowed, the variation in the correction is reduced. At 0.02 seconds, the bandwidth has narrowed significantly and the variation is minimized.

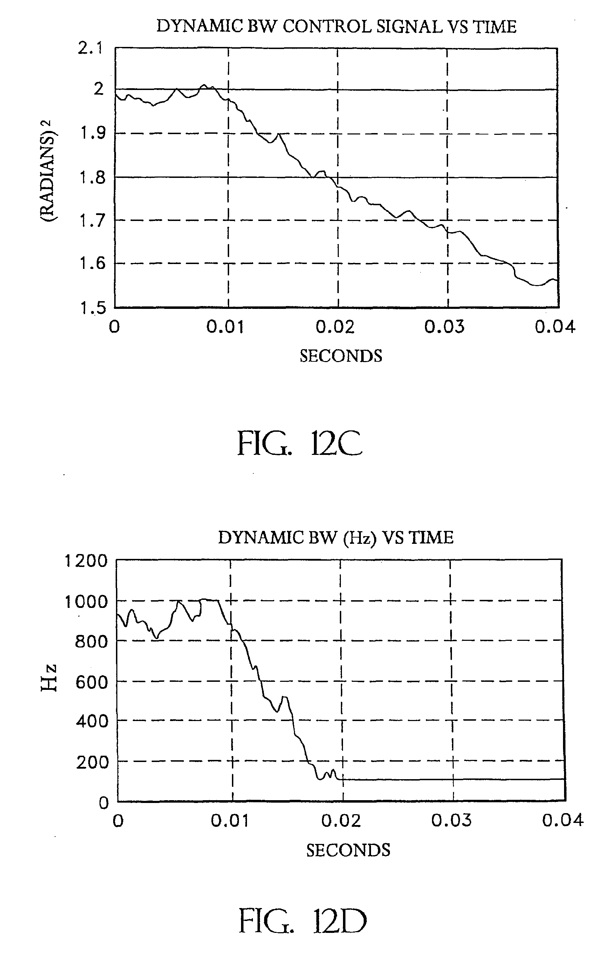

**Figure 12C** shows the bandwidth control signal (in Radians$^2$) as a function of time (in seconds), which is a measure of the variance of the phase error. After initial lock-on of the PLL 10, the variance begins to decrease which, in turn, causes the dynamic bandwidth to narrow (see **Figure 12D**). The variance continues to decrease as the PLL 10 improves its ability to estimate phase correction.

**Figure 12D** shows the dynamic bandwidth (in Hertz) as a function of time (in seconds). The bandwidth is near its maximum of 1000Hz up until initial lock-on of the PLL **10** at around 0.01 seconds. With lock-on, phase error is reduced, causing the bandwidth to begin narrowing. The bandwidth approaches it minimum of 100Hz as the phase error continues to be reduced.

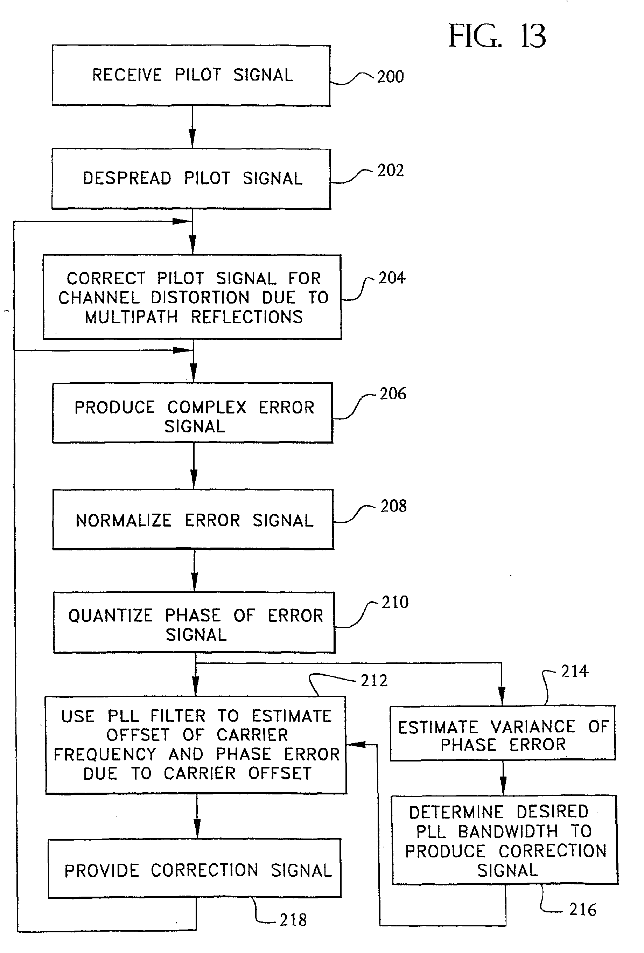

The process for determining the amount of phase error, determining an appropriate PLL **10** bandwidth, adjusting the PLL 10 bandwidth and controlling the VCO **118** to provide an updated correction signal 50 is summarized in **Figure 13**. After the pilot signal **17** has been received (**step 200**) by the pilot rake receiver **40**, the pilot signal **17** is despread (**step 200**) and corrected for channel distortion due to multipath reflections (**step 204**)**.** A complex error signal is produced **(step 206)** and the error signal is normalized **(step 208)** prior to quantizing the phase of the error signal **(step 210).** The bandwidth control section **120** estimates the variance of the phase error (**step 214**) and determines the desired PLL bandwidth to produce a correction signal (**step 216**). The PLL filter **116** provides an estimate of the offset of the RF carrier signal and the phase error due to the carrier signal offset (**step 212**) and provides a correction signal (**step 218**) to the pilot rake receiver **40** and the data receiver **42**. In this manner, the bandwidth of the PLL filter **116** is continuously adjusted and refined as the magnitude of the error signal **126** output from the arctangent analyzer **114** decreases.

Although the invention has been described in part by making detailed reference to certain specific embodiments, such detail is intended to be instructive rather than restrictive. It will be appreciated by those skilled in the art that many variations may be made in the structure and mode of operation without departing from the spirit and scope of the invention as disclosed in the teachings herein. For example, the specific transfer function may be modified depending upon the RF channel to be analyzed and the current conditions of the system. Additionally, analysis of the quantized phase error signal may be performed using a different mathematical analysis while still providing a continuously updated PLL bandwidth signal. The analysis to be performed on the quantized phase error signal is typically a trade off between the amount of processing power required for the computational analysis versus the improvement in performance.

Preferred Aspects of the invention:

1. A system for receiving CDMA communication signals comprising:

means for receiving a CDMA, communication signal transmitted on a selected RF carrier frequency, including means for removing said RF carrier frequency to provide a received information signal;

means for adjusting the phase of said received information signal to correct for phase errors including:

means for generating a correction signal;

means for mixing said correction signal with said received information signal to produce a phase corrected information signal;

means for analyzing the phase of the phase corrected information signal and generating a phase error signal based on the deviation of the analyzed phase from a predetermined phase;

means for providing an adjusting signal of a calculated magnitude within a selected range, said providing means being responsive to said phase error signal whereby the phase corrected signal is recursively adjusted by successive analysis of the corrected information signal.,

2. The system of Aspect 1 wherein said phase corrected information signal comprises an in-phase component and a quadrature component and said analyzing means further comprises look-up table means for determining the phase of said phase corrected information signal; wherein said look-up table means accepts said phase collected information signal and outputs said phase error signal.

3. The system of Aspect 2 wherein said analyzing means further comprises normalizing means which includes:

means for determining the magnitude of the in-phase component and the magnitude of the quadrature-phase component;

means for determining the larger of said magnitudes; and

means for dividing both said magnitudes by said larger magnitude to output a pseudonormalized phase corrected information signal.

4. The system of Aspect 2 wherein said providing means further includes bandwidth calculation means which accepts said phase corrected information signal arid outputs a bandwidth signal based upon a preselected transfer function.

5. The system of Aspect 4 wherein said providing means further includes a filter, having a selectable bandwidth, for maintaining said adjusting signal within said selected range.

6. The system of Aspect 5 wherein said filter is responsive to said bandwidth signal from said bandwidth calculation means.

7. The system of Aspect 5 wherein said predetermined phase is zero phase.

8. The system of Aspect 3 wherein said providing means further includes bandwidth calculation means which accepts said pseudonormalized phase corrected information signal and outputs a bandwidth signal based upon a preselected transfer function.

9. The system of Aspect 6 wherein said providing means further includes a voltage controlled oscillator, responsive to said filter means, for generating said adjusting signal.

10. The system of Aspect 9 wherein said transfer function comprises a continuous linear function.

11. The system of Aspect 2 wherein said look-up table means comprises a matrix of eight discrete in-phase component values by eight discrete quadrature component values.

12. The system of Aspect 2 wherein said analyzing means further comprises normalizing means which includes:

means for determining the magnitude of the phase corrected information signal; and

means for dividing said phase corrected information signal by said magnitude to output a normalized phase corrected information signal.

13. A method for receiving CDMA communication signals comprising:

receiving a CDMA communication signal transmitted on a selected RF carrier frequency, including removing said RF carrier frequency to provide a received information signal;

adjusting the phase of said received information signal to correct for phase errors including:

generating a correction signal;
mixing said correction signal with said received information signal to produce a phase corrected information signal;
analyzing the phase of the phase corrected information signal and generating a phase error signal based on the deviation of the analyzed phase from a predetermined phase;
providing an adjusting signal of a calculated magnitude within a selected range, said providing step being responsive to said phase error signal whereby the phase corrected signal is recursively adjusted by successive analysis of the corrected information signal.

14. The method of Aspect 13 wherein said phase corrected information signal comprises an in-phase component and a quadrature component and said analyzing step further comprises the step of determining the phase of said phase corrected information signal using a look-up table means; wherein said look-up table means accepts said phase corrected information signal and outputs said phase error signal.

15. The method of Aspect 14 wherein said analyzing step further comprises a pseudonormalizing step which includes:

determining the magnitude of the in-phase component and the magnitude of the quadrature-phase component;
determining the larger of said magnitudes; and
dividing both said magnitudes by said larger magnitude to output a pseudonormalized phase corrected information signal.

16. The method of Aspect 14 wherein said providing step further includes a bandwidth calculation step for accepting said phase corrected information signal and outputting a bandwidth signal based upon a preselected transfer function.

17. The method of Aspect 14 wherein said providing step further includes a filtering step, for maintaining said adjusting signal within said selected range, wherein said filtering is performed within a selectable bandwidth.

18. The method of Aspect 17 wherein said filter step is responsive to said bandwidth calculation step.

19. The method of Aspect 17 wherein said predetermined phase is zero phase.

20. The method of Aspect 15 wherein said providing step further includes a bandwidth calculation step for accepting said normalized phase corrected information signal and outputting a bandwidth signal based upon a preselected transfer function.

21. The method of Aspect 14 wherein said analyzing step further comprises a normalizing step which includes:

determining the magnitude of the phase corrected information signal;
dividing phase corrected information signal by said magnitude to output a normalized phase corrected information signal.

**Claims**

1. A receiver for receiving a CDMA communication signal transmitted on an RF carrier frequency and demodulating said RF carrier frequency to provide a received information signal; the receiver including a system for correcting phase errors in an information signal which has been modulated on said RF carrier frequency; the correction system comprising:

circuitry for generating a mixing signal and for combining said mixing signal with said information signal to produce a correction signal;
an analyzer for analyzing the phase of said correction signal and generating an error signal based on the deviation of the analyzed phase from a reference phase; and
a bandwidth controller which recursively adjusts the phase of said correction signal such that the phase of said correction signal is substantially equal to said reference phase; said bandwidth controller selecting a bandwidth within an adjustable range based on said correction signal, estimating an offset by interrogating said error signal; and modifying said collection signal by said offset.

2. The receiver of claim 1 wherein said correction signal comprises an I (in-phase) component and a Q (quadrature) component, and said analyzer further comprises a look-up table for determining the phase of said correction signal; said look-up table accepting said correction signal and generating said error signal.

3. The receiver of claim 2 wherein said analyzer further comprises a normalizer for determining the magnitude of the I component and the magnitude of the Q component, selecting the larger of said magnitudes, and dividing both of said magnitudes by said larger magnitude to output a pseudonormalized correction signal.

4. The receiver of claim 2 wherein said bandwidth controller further includes a bandwidth calculation mechanism which accepts said correction signal and outputs a bandwidth signal based upon a transfer function.

5. The receiver of claim 4 wherein said bandwidth controller further includes a filter having an adjustable bandwidth for maintaining said adjustable range based on said correction signal.

6. The receiver of claim 5 wherein said filter is responsive to said bandwidth signal from said bandwidth calculation mechanism.

7. The receiver of claim 4 wherein said bandwidth controller further includes a bandwidth calculation mechanism which accepts said pseudonormalized correction signal and outputs a bandwidth signal based upon a transfer function.

8. The receiver of claim 6 wherein said bandwidth controller further includes a voltage controlled oscillator responsive to said filter for generating said adjusting signal.

9. The receiver of claim 8 wherein said transfer function comprises a continuous function.

10. The receiver of claim 2 wherein said look-up table comprises a matrix of at least eight discrete in-phase component values by at least eight discrete quadrature component values.

11. The receiver of claim 2 wherein said analyzer further comprises a normalization mechanism which determines the magnitude of the correction signal and divides said correction signal by said magnitude to output a normalized correction signal.

12. A method for use with a receiver equipped to receive a CDMA communication signal transmitted on an RF carrier frequency, demodulate said RF carrier frequency to provide a received information signal, and correct phase errors in an information signal which has been modulated on said RF carrier frequency; the method comprising the steps of:

generating a mixing signal;
combining said mixing signal with said information signal to produce a correction signal;
analyzing the phase of said correction signal;
generating an error signal based on the deviation of the analyzed phase from a reference phase;
recursively adjusting the phase of said correction signal such that the phase of said correction signal is substantially equal to said reference phase;
selecting a bandwidth within an adjustable range based on said correction signal, estimating an offset by interrogating said error signal; and modifying said correction signal by said offset.

13. The method of claim 12 wherein, said correction signal comprises an I (in phase) component and a Q (quadrature) component, the method further comprising the step of using a look-up table to determine the phase of said correction signal, such that said look-up table accepts said correction signal and generates said error signal in response thereto.

14. The method of claim 13 further comprising the steps of determining the magnitude of the component and the magnitude of the Q component, selecting the larger of said magnitudes, and dividing both of said magnitudes by said larger magnitude to output a pseudonormalized correction signal.

15. The method of claim 12 further comprising the steps of accepting said correction signal and outputting a bandwidth signal based upon a transfer function.

16. The method of claim 15 further including the step of maintaining said adjustable range based on said correction signal.

17. The method of claim 14 further including the steps of receiving said pseudo normalized correction signal and generating a bandwidth signal based upon a transfer function.

18. The method of claim 17 wherein said transfer function comprises a continuous function.

19. The method of claim 13 further including the steps of determining the magnitude of the correction signal and dividing said correction signal by said magnitude to output a normalized correction signal.

FIG. 1

FIG. 2

FIG. 3

20

PLL
10

INFORMATION SIGNAL

50

30

PILOT RAKE RECEIVER

40

45

DATA RECEIVER

42

44

46

63

RF DOWNCONVERTER

A/D SECTION

65

60

61

14

FIG. 4

FIG. 5

COMPLEX NUMBER

FIG. 6

EP 1 538 799 A2

150

Q

| | −10 | −9 | −8 | • • • | 8 | 9 | 10 |
|---|---|---|---|---|---|---|---|
| 10 | $\phi_1$ | $\phi_2$ | $\phi_3$ | • • • | $\phi_{19}$ | $\phi_{20}$ | $\phi_{21}$ |
| 9 | $\phi_{22}$ | $\phi_{23}$ | $\phi_{24}$ | • • • | $\phi_{40}$ | $\phi_{41}$ | $\phi_{42}$ |
| 8 | $\phi_{43}$ | $\phi_{44}$ | $\phi_{45}$ | • • • | $\phi_{61}$ | $\phi_{62}$ | $\phi_{63}$ |
| ⋮ | ⋮ | ⋮ | ⋮ | ⋮ | • • • | ⋮ | ⋮ | ⋮ |
| −8 | $\phi_{379}$ | $\phi_{380}$ | $\phi_{381}$ | • • • | $\phi_{397}$ | $\phi_{398}$ | $\phi_{399}$ |
| −9 | $\phi_{400}$ | $\phi_{401}$ | $\phi_{402}$ | • • • | $\phi_{418}$ | $\phi_{419}$ | $\phi_{420}$ |
| −10 | $\phi_{421}$ | $\phi_{422}$ | $\phi_{423}$ | • • • | $\phi_{439}$ | $\phi_{440}$ | $\phi_{441}$ |

I

FIG. 7

152

FIG. 8

FIG. 9

PLL FILTER 116

FROM BANDWIDTH CONTROL SECTION 130

QUANTIZED PHASE 126

LAG FILTER
$a + b/s$
140

LEAD FILTER
$1/s$
142

144

128

TO VCO 118

BANDWIDTH CONTROL SECTION                                                    120

170          172          174

SQUARING UNIT → LEAKY INTEGRATOR → BANDWIDTH CALCULATION UNIT → SAMPLE/HOLD UNIT

160          162          164          168

126

FROM ARCTANGENT ANALYZER 114                                    TO PLL FILTER 116

FIG. 10

EP 1 538 799 A2

EP 1 538 799 A2

$B_W(H_Z)$

180

$BW_{HI}$

OUTPUT
174  (B)

$BW_{LO}$

PHASE ERROR

$\gamma_{LO}$  (A)  $\gamma_{HI}$

INPUT 172

FIG. 11

PLL-DETERMINED FREQUENCY OFFSET (Hz)

FIG. 12A

PLL ERROR (WRT CARRIER PHASE OFFSET)

FIG. 12B

DYNAMIC BW CONTROL SIGNAL VS TIME

FIG. 12C

DYNAMIC BW (Hz) VS TIME

FIG. 12D

FIG. 13

```
RECEIVE PILOT SIGNAL              ⌐200

        │
        ▼

DESPREAD PILOT SIGNAL             ⌐202

        │
        ▼

CORRECT PILOT SIGNAL FOR          ⌐204
CHANNEL DISTORTION DUE TO
MULTIPATH REFLECTIONS

        │
        ▼

PRODUCE COMPLEX ERROR             ⌐206
SIGNAL

        │
        ▼

NORMALIZE ERROR SIGNAL            ⌐208

        │
        ▼

QUANTIZE PHASE OF ERROR           ⌐210
SIGNAL
```

⌐212                                 ⌐214

USE PLL FILTER TO ESTIMATE          ESTIMATE VARIANCE OF
OFFSET OF CARRIER                   PHASE ERROR
FREQUENCY AND PHASE ERROR
DUE TO CARRIER OFFSET

PROVIDE CORRECTION SIGNAL          DETERMINE DESIRED
                                   PLL BANDWIDTH TO
                                   PRODUCE CORRECTION
                                   SIGNAL

⌐218                                 ⌐216